# EUROPEAN PATENT APPLICATION

(11) **EP 2 618 524 A1**
(43) Date of publication of application: **24.07.2013**
(21) Application number: 12290002.0
(22) Date of filing: 02.01.2012
(51) Int. Cl.: H04L 12/26, H04L 12/70, H04L 12/24

(54) **Method for providing QoS management in a packet-based transport network**

(71) Applicant: Alcatel Lucent, 75007 Paris (FR)
(72) Inventor: Corbetta, Giuliano, 20133 Milano (IT); Dusi, Maurizio, 26030 Gadesco Pieve Delmona (IT); Boiocchi, Gianluca, 24046 Oslo Sotto (bergamo) (IT); Salgarelli, Luca, 25123 Brescia (IT); Gringoli, Francesco, 25123 Brescia (IT)
(74) Representative: Zinsinger, Norbert

(57) **Abstract**

The present invention concerns a method for providing QoS management in a packet-based transport network and a network element (8) adapted to provide QoS management in a packet-based transport network. The method comprises the steps of extracting (2a) out of a data traffic (3) comprising one or more data flows (4) transported via the transport network features characterizing a type of traffic (5), comparing (2b) the extracted features against predetermined traffic patterns related to different types of traffic (5) and calculating (2c) a classification result based on the comparison.

## Description

### Field of invention

The present invention relates to packet-based transport networks and, more specifically to a method for providing QoS (=Quality of Service) management in a packet-based transport network by validating the classification of the type of traffic transported via the transport network.

### Background

In packet-based transport networks efficient QoS management is needed to assign the proper bandwidth and priority to the data traffic being transported via the network. Therefore, the data traffic has to be classified in terms of different types of traffic according to different QoS levels. A type of traffic may be related to a specific application or service such as VoIP, video streaming, FTP, peer-to-peer and/or to a specific traffic class like "conversational", "streaming", "interactive", "background" used e.g. in UMTS/LTE transport networks.

Traditionally, the association between a packet of a data traffic and the application/service/class of traffic that generated the packet is performed by a device, in particular a network element or a part of a network element, classifying the packets through their inspection and the analysis of the e.g. TCP/UDP ports or through the analysis of the application-level payload.

However, these classification techniques are prone to mis-classification due to wrong configuration of the device or to the fraudulent use of some applications such as peer-to-peer, which may use tunnelling techniques or well-known TCP/UDP ports to circumvent security policy or to increase the priority of the traffic they exchange. Furthermore, the payload inspection techniques are very resource-intensive and become completely ineffective, when encryption is used to protect the confidentiality of data carried via the transport network.

### Summary

The objective of the present invention is to improve the QoS management in packet-based transport network.

The objective of the present invention is achieved by a method for providing QoS management in a packet-based transport network, the method comprising the steps of extracting out of a data traffic comprising one or more data flows transported via the transport network one or more features characterizing a type of traffic, comparing the extracted features against predetermined traffic patterns related to different types of traffic and calculating a classification result based on the comparison. The objective of the present invention is further achieved by a controller adapted to extract out of a data traffic comprising one or more data flows transported via a transport network features characterizing a type of traffic, compare the extracted features against predetermined traffic patterns related to different types of traffic and calculate a classification result based on the comparison. The objective of the present invention is further achieved by a network element adapted to extract out of a data traffic comprising one or more data flows transported via a transport network features characterizing a type of traffic and by a data processing unit adapted to compare one or more extracted features characterizing a type of traffic against predetermined traffic patterns related to different types of traffic and to calculate a classification result based on the comparison.

The present invention aims to overcome the afore-mentioned restrictions of the prior art solutions to classify the traffic type through the analysis of the port of the network element processing the data traffic or through the analysis of the application-level payload by a method to classify a data traffic by determining the traffic type of the packets transported via the network based on the features extracted from the traffic flow by means of a statistical technique.

Further advantages of the present invention are achieved by the embodiments of the invention indicated by the dependent claims.

In a preferred embodiment, the step of extracting characterizing features out of the data traffic comprises the step of excerpting from the data traffic one or more data flows comprising a plurality of packets of said data flows. This means that, firstly, out of a data traffic comprising more than one data flow, each data flow is excerpted out of the whole data traffic. This step of excerpting data flows out of the data traffic might be executed on the basis on the information provided by the data packets. Even if the traffic type assigned to one specific data flow might not be trusted, it might be assumed that the information e.g. in the header fields of the data packets can be trusted in so far as the packets assigned to a specific data flow are actually belonging to the respective data flow, while the traffic type assigned by the packet header information might be fraudulent. This means, that packets being assigned by the data packets header information to a specific application like e.g. a video stream, might actually be an e-mail service, but despite this fraudulent use of the wrong classification, the packets being assigned likewise are actually belonging to the same data flow, which would be in this example the e-mail service.

Therefore, the packets belonging to each respective data flow are taken out of the data traffic and put together to form the corresponding data flow. This is done for each data flow comprised in the data traffic. This step of excerpting the data flows out of the data traffic is executed on the basis of an epoch, wherein an epoch is a certain period of time (e.g., 10s of data traffic) or a certain amount of received or transmitted data (e.g., 10 MB of data traffic) or a combination thereof. Afterwards out of each data flow excerpted out of the data traffic features characterizing the type of traffic of said data flow are extracted.

In a preferred embodiment, the classification result itself is calculated on the basis of an epoch. This means that after the features are extracted out of the data flow and the step of comparing the features against the traffic patterns corresponding to a specific traffic type, even the result of classification, in particular the assigned traffic type, is likewise provide for a given epoch, this means for every consecutive epoch anew, so that the method can react to the changing of the carried data flows and the therein carried data traffic types properly, which at least includes the possibility to take the estimated traffic classes of previous epochs into account for the current assigning of a traffic type as it will be explained in more detail below.

In a preferred embodiment, the step of calculating a classification result comprises evaluating based on the comparison an estimate of the portion of traffic of a traffic type in the epoch and assigning the epoch to a traffic type based on the estimate.

In a preferred embodiment, the step of calculating a classification result further comprises considering the classification results determined about previous epochs and stored in a history buffer, which is a storage memory, before classifying a current epoch, wherein, if a current epoch is carrying a type of traffic different from an expected one, the current value of epochs previously assigned to the expected type of traffic is computed based on the history buffer and the current epoch is assigned to the expected type of traffic, if the current value of epochs previously assigned to the expected type of traffic is equal or higher than a predetermined percentage value, and the current epoch is assigned to the estimated type of traffic different from the expected one, if the current value of epochs previously assigned to the expected type of traffic is lower than the predetermined percentage value. The goal of the using the memory algorithm taking into account the previously classified epochs is to find the optimal trade-off between the robustness of classification, that should not be sensitive to spurious statistical realizations, and promptness to detect actual changes in the traffic characteristics due to change of configuration and/or not conformant traffic.

In a preferred embodiment, the features for classifying a type of traffic are e.g. the packet size of the current packet, the packet size of the previous packets and statistics like mean value, standard-deviation, minimum, maximum, bytes per packet related to the number of consecutive packets and the corresponding amount of bytes, ingress/egress packet symmetry in terms of bytes, ingress/egress packet symmetry in terms of number of packets and direction in terms of port numbers.

In a preferred embodiment, the transport network is an Ethernet-based transport network and in another preferred embodiment the transport network is a MPLS (Multi Protocol Label Switching) network. In a preferred embodiment, the transport network may be a LTE (Long Term Evolution) transport network, implemented e.g. with UMTS technology.

In a preferred embodiment, the type of traffic is a given application/service of the one or more data flows, e.g. web application, peer-to-peer, e-mail, chat, FTP, progressive or interlaced video, or a given UMTS/LTE traffic class such as "conversational", "streaming", "interactive" or "background". In a specific implementation, the IP packets belonging to different traffic classes are supposed to be associated to different corresponding Ethernet CoS (Classes of Service), i.e. Ethernet frames having common layer2 header parameters (in a specific case such parameters may be 802.1 p bits and/or VLAN ID). When applied to MPLS networks, the traffic classes might be mapped to Exp (=Experimental) bits within Tunnel/PW (=Pseudowire) Label.

In a preferred embodiment, the method further comprises storing a plurality of traffic patterns related to different types of traffic and in another preferred embodiment, the method further comprises determining the traffic patterns related to the different types of traffic during a training phase by collecting features of the one or more data flows in a controlled way with a-priori knowledge of the type of traffic being carried by the one or more data flows, wherein the features are collected on the basis of an epoch. In a preferred embodiment, the training phase is carried out in a lab test. As the training phase serves to elaborate the traffic patterns for classifying the data traffic, it has to be carried out prior to the steps of classifying the type of traffic, which is also termed as "run-time" classification phase, because hereby the "live" traffic which is transported via the transport network is classified by the network element. The training phase should reflect the general traffic characteristics of the network (e.g., Ethernet layer2 transport, IPSec, RoHC (Robust Header Compression), etc., but should not be affected by any traffic characteristics of actual network deployment on field (topology, load and load variation, both for absolute value and composition in terms of traffic class proportions, delay and delay variation).

In a preferred embodiment, the statistical classification technique proposed belongs to the category of soft classification techniques, and assigns a class membership value to each epoch, representing the fraction of bytes generated by that traffic class/type of traffic. The adopted model is composed of a set of decision trees, one for each class/type of traffic. The technical implementation will be described below in more detail.

In a preferred embodiment, the step of determining the traffic patterns comprises scanning packet header fields of the packets of the one or more data flows to identify the type of traffic, wherein the packet header fields to be scanned to identify the type of traffic are known a-priori or are chosen automatically. In a preferred embodiment, the method comprises continuously or periodically executing the step of extracting features characterizing the type of traffic. In a preferred embodiment, the method is elaborated on the layer2 of the OSI reference model. The therein used term "frames" is then referred to by the term "packages" used in this invention equivalently.

In a preferred embodiment the method further comprises using the result of classification for a given epoch for alarm reporting, QoS enforcement, QoS provisioning, QoS monitoring. For example, if the expected traffic type is not estimated in the current epoch, as e.g. peer-to-peer traffic is confused with VoIP traffic at least based on the estimated classification result, a mis-configuration alarm might be advertised or effectuated, as it will be more detailed below. The QoS or service improvement might be done by properly remarking the header of packets forwarded within the transport network (e.g., the 802.1 p PCP bits, IPv4 DiffServ field, MPLS Exp bits according to the carrying transport network).

In a preferred embodiment, the method further comprises further processing the data traffic, in particular if the type of traffic being detected is not conformant with the expected behaviour of the flow, wherein the network element decides autonomously over the further processing of the traffic like redirecting, dropping etc. Furthermore dedicated application/service packet processing, e.g. header/payload compression might be applied and/or encrypted traffic aggregates might be characterized.

In a preferred embodiment, the controller is a processor comprising a micro-processing unit and processor storage means. The controller may be implemented within an electronic circuit which executes computer programs, containing a processing unit and a control unit. The controller may be implemented in software, in hardware or in a combination thereof. The controller may be implemented as an integrated circuit or in an ASIC. The processing unit may be implemented as a software program, in a hardware-based routine or in a combination thereof. The processing unit may be a portion of a computer system that carries out the instructions of a computer program.

### Brief Description of the Figures

The features and advantages of the present invention will be more completely understood by reference to the following detailed description when taken in conjunction with the accompanying drawings, wherein:
- Fig. 1: depicts an overall view of an exemplary network comprising a packet-based transport network
- Fig. 2: depicts an overall view of the structure of processing a data traffic by a network element implementing the method of classifying the traffic type of the data traffic
- Fig. 3: depicts a more detailed diagram of the method of classifying the traffic type of the data traffic
- Fig. 4: depicts a diagram of the training phase for providing traffic patterns related to a corresponding traffic class
- Fig. 5: depicts a diagram of classification results over several epochs

### Description of Embodiments

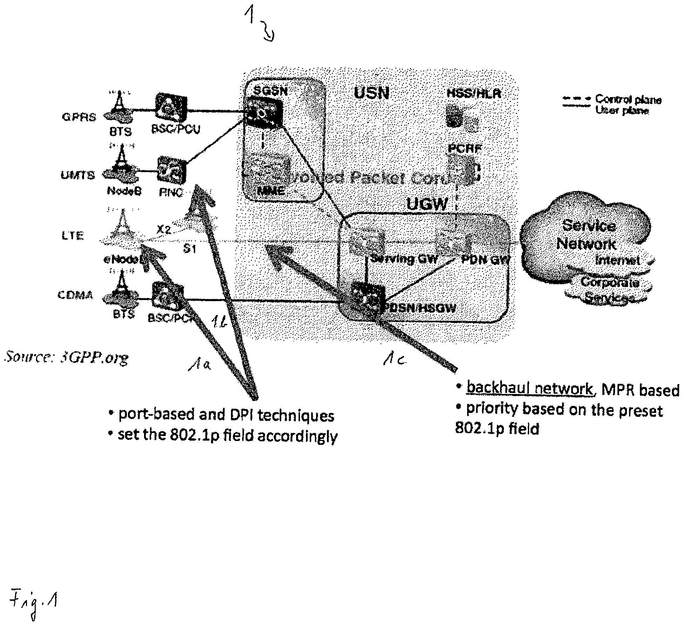

Fig. 1 depicts an overall view of an exemplary network comprising a packet-based transport network 1. The flashes 1 a and 1 b show examples, where port-based classification methods and application level methods like Deep Packet Inspection (DPI) are elaborated within the access network part of the network. In contrast thereto, the method of classifying the data traffic transported by a transport network 1, which is the subject-matter of this invention is elaborated in the backhaul network, which is termed herein as the transport network 1 in distinction to e.g. the access network part of the network. Flash 1 c shows for exemplary reasons, the data traffic over the S1 interface between an eNodeB of an LTE network and a Serving GW within the transport network 1. Accordingly, the method of classifying a data traffic according to this invention would be elaborated e.g. by the Serving GW as the network element where the method is implemented.

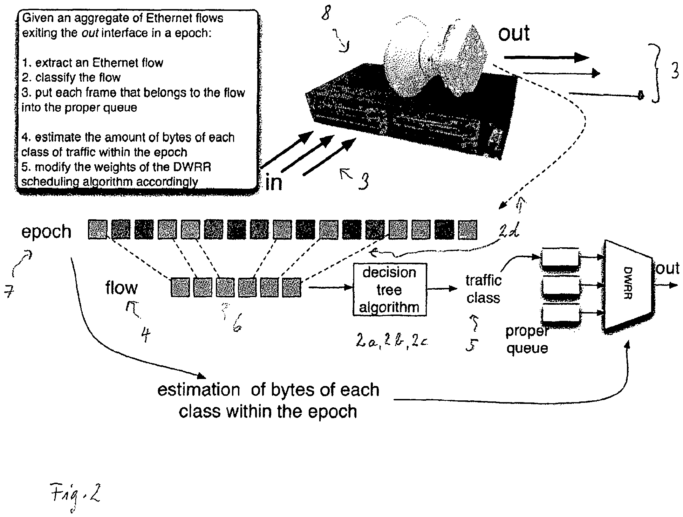

Fig. 2 depicts an overall view of the structure of processing a data traffic by a network element 8 implementing the method of classifying the traffic type 5, e.g. the traffic class, of the data traffic . A data traffic ingressing and egressing the network element 8 of the transport network 1 is shown by the flashes 3. The data traffic 3 depicted in fig. 2 can be understood as a logic part of the overall data traffic transported by the transport network 1. In fig. 2, the data traffic 3 is an aggregate of Ethernet flows entering and exiting the interfaces of the network element 8. The data traffic 3 as depicted in fig. 2 comprises one or more data flows 4, of which for illustrative reasons only one data flow 4 is depicted in more detail and in the following the method of classifying the data traffic is described with reference in particular of one data flow 4, while the scope of the invention covers the method of classifying the data traffic comprising one or more data flows as the generic nomination equivalently.

As the transport network 1 is a packet-based network, the data flow 4 comprises a plurality of packets 6 which are carrying the data belonging to the data flow 4. For exemplary reasons the data flow 4 of which the traffic type 5 is to be classified is a flow exiting the out interface of the network element 8. In order to classify the traffic type 5 of the data flow 4, the data flow 4 is excerpted from the data traffic 3, which means that the packets 6 of the data flow 4 are taken out of the data traffic 3 to thereby form the data flow 4 of consecutive data packets 6 as depicted in fig. 2. The step of excerpting 2d the data flow 4 from the data traffic 3 is provided on the basis on an epoch 7, which is a certain period of time or a certain amount of received or transmitted data or a combination thereof. This means that for the amount of packets within one epoch 7, the packets belonging to a given data flow are taken out and put together to form the given flow and in case of more flows the packets belonging to another flow are taken out of the packets within an epoch to form the respective flow and so on. For the next epoch, the same procedure is provided. In fig. 2, it can be seen that out of the data traffic on the basis on an epoch 7, the packets 6 belonging to the data flow 4, are taken to form the data flow 4 for further processing. In order to classify the data flow 4, features characterizing a type of traffic are in the following extracted out of the data flow 4 and thereby the features - in a more generic nomination - are extracted 2a out of the data traffic 3. The extracted features are then compared against predetermined traffic patterns related to different types of traffic and - based on the comparison - a classification result, in particular in terms of a specific type of traffic, e.g. a specific traffic class 5 or a specific application/service is calculated. The steps of extracting 2a the characterizing features, comparing 2b the features against predetermined traffic patterns and calculating 2c a classification result are implemented in a decision tree algorithm, which is a statistical classification technique belonging to the category of soft classification techniques, in particular implemented by classification and regression tree (CART) algorithms, as it will be described in more detail below. As further processing of the method for providing QoS management in the packet-based transport network, the data flow 4, after the traffic class 5 is calculated, is put for example in the proper queue of a DWRR (Deficit Weighted Round Robin) element, which is provided with an estimation of bytes of each traffic class 5 within a given epoch 7 to modify the weights of the DWRR scheduling algorithm accordingly. This further processing is, however, only depicted in fig. 2 for illustrative reasons, and is not meant to limit the scope of the invention which is defined by the wording of the claims.

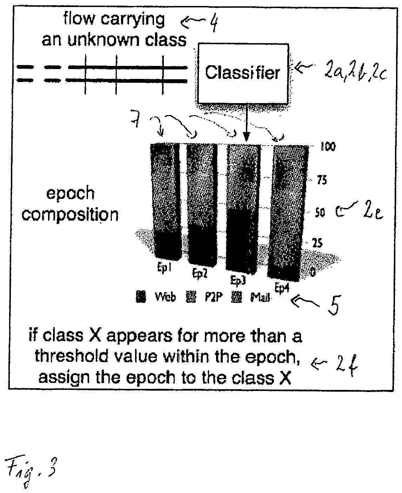

Fig. 3 depicts a more detailed diagram related to the method of classifying the traffic type 5 of a data flow 4. As shown in fig. 3, the data flow 4 carrying an unknown class, that is the traffic type 5 is unknown before classification, is put into the classifier which implements the decision tree algorithm, in particular by the steps 2a, 2b, 2c and further the steps 2e and 2f, which are presented in more detail in fig. 3 for clarifying reasons being also part of the classification method as implemented in the embodiment illustrated in fig. 3, where it is shown that the classification result in terms of the traffic class 5 assigned the data flow 4 is calculated and assigned on the basis of an epoch 7. This means, that the packets 6 belonging to the data flow 4 which is to be classified are taken out of the data traffic 3 on the basis of an epoch 7 and the classification result in terms of traffic classes 5 calculated by the features characterizing a traffic type 5 is provided for en epoch 7 of the data flow 4. With other words, the method of classifying the traffic type 5 of a data flow 4 is implemented epoch per epoch anew. In the embodiment depicted in fig. 3, after the features characterizing a traffic type 5 are extracted 2a out of the data flow 4 and compared 2b against predetermined traffic patterns, the step of calculating 2c a classification result based on the comparison further comprises evaluating 2e - based on the comparison of the extracted features against traffic patterns - an estimate of the portion of traffic of a traffic type 5 on the basis of an epoch 7.

In a preferred embodiment, which is not in detail depicted in the figures, the packets 6 of a data flow 4 taken out of the data traffic 3 on the basis of an epoch 7 are put into an algorithm based on classification and regression trees (for short classification trees), in more detail that means that in each classification tree corresponding to each traffic class 5 of which the portion of packets 6 transported by the data flow 4 is to be estimated. This means that for each traffic class 5 a classification tree is provided, the classification tree giving an estimate of the percentage of each traffic class in the epoch 7.

In fig. 3, the estimated portion of the traffic classes 5, e.g. web application, peer-to-peer (P2P) or mail, are denominated as epoch composition and depicted in fig. 3 by the reference sign 2e. The predominant traffic class 5 which has the highest portion of packets 6 of the data flow 4 within a given epoch 7, is termed as the candidate traffic class and is defined as the actual traffic class 5 of the traffic flow 4 for this epoch 7. This means, that, if this class, for example class X, appears for more than a threshold value within the epoch 7, then the epoch 7 is assigned to the class X as shown in step 2f in fig. 3. Thereby, all packets 6 of the respective data flow 4 within the epoch 7 are given the classification of the assigned traffic class/type 5 for further processing the packets belonging to the data flow 4. For exemplary reason, by the same classification of the traffic type 5, the packets can be put into the proper queue for the following deficit weighted round robin algorithm as it is already shown for illustrative reasons in fig. 2 as example of the further processing of the data flow after classification.

The process of classification by the classification tree should now be explained for a specific example for illustrative reasons. For each traffic class 5 which is assumed to be carried by the data traffic 3, a classification tree is built, for exemplary reason video streaming application. At every node of the classification tree, a decision is made, by comparing the extracted features characterizing the data flow 4 with the corresponding traffic pattern. For example, the length of the packets is verified, and as classification decision it is assumed that the data flow 4 carries video streaming and not e.g. e-mail, because the length of the packets 6 corresponds to the traffic pattern of video streaming rather than the traffic pattern of e-mail. Then the next decision is made on the next node, for example by looking at the numbers of consecutive packets, and thereby a decision is made for example that the data flow 4 carries progressive video and not interlaced video, because the numbers of consecutive packets 6 corresponds to the traffic pattern of progressive video rather than of interlace video. In the end, the classification tree gives the estimation of the portion of traffic of the traffic class 5 verified by the classification tree for this epoch 7, in more detail the classification tree gives an estimate, because this is a statistical approach, of a portion of packets 6 of a specific traffic class 5 carried by the data flow 4. Analogously, each other classification tree for another assumed traffic class 5, where the features are equivalently put into for classification, might return an estimated percentage value of packets of this other traffic class 5 carried by the flow 4, because the features extracted out of the data flow 4 corresponds also to the traffic patterns of this other traffic class 5 with a specific regression value estimated. After all regression values are estimated, the regression values for all classes are normalized so that they sum up to 100 percent. Afterwards, the regression values are compared and, if the estimated percentage value of a specific traffic class 5 which is predominant over the estimated percentage values of other traffic classes carried by the data flow 4, which is therefore termed as candidate traffic class, appears more than a threshold value within the epoch 7, this epoch 7 is assigned the traffic class 5 of the estimated predominant traffic class 5 being classified as the actual traffic class 5 of the data flow 4 within the epoch. The classification and regression tree algorithm herein described in more detail is only one of many implementations of classification and regression tree algorithms and is presented only for illustrative reasons and not meant as limiting the scope of the invention.

In a preferred embodiment, a memory algorithm is added to the classification technique. For this reason, a history buffer, which is a storage memory allowing to implement a temporal sliding window, is provided for storing the classification results, in particular in terms of traffic class 5 assigned to the previous epochs. Taken into account that epochs close in time under normal condition carry the same class of traffic 5 related to a specific traffic flow 4, before classifying a current epoch 7, the classification result for previous epochs are checked. If a current epoch 7 is carrying a type of traffic 5, e.g. a traffic class, different from an expected one, the current value of epochs previously assigned to the expected type of traffic 5 is computed based on the stored data in the history buffer and the current epoch 7 is actually assigned to the expected type of traffic and not to the type of traffic assumed by the estimated classification value of the traffic class unexpected, if the current value of epochs previously assigned to the expected type of traffic is equal or higher than a predetermined percentage value (common for all epochs stored in the history buffer). If, however, the current value of epochs previously assigned to the expected type of traffic is lower than the predetermined percentage value, the current epoch is assigned to said type of traffic different from the expected one, i.e. to the estimated type of traffic according to computed classification result as estimated by the regression value.

In a preferred embodiment, the memory algorithm may be implemented in more detail as summarized in the following. First the length of the history buffer is set, it is how many past epochs have to be considered in the decision process. Then, the weight of the history buffer is set, that is the percentage of epochs, e.g. bytes, that must have been assigned to the expected traffic class X in the history buffer for considering the traffic class X as the dominant traffic class transported by the e.g. Ethernet flow. If the current epoch is carrying a class Y different from the expected one, the history buffer is checked and the current value of epochs, e.g. bytes, previously assigned to class X is computed and defined as the value "currW". If the value "currW" is more or equal to the weight of the history buffer, i.e. the percentage of epochs that must have been assigned to the expected class X for the corresponding classification, the epoch is assigned to the class X (but within the history buffer the assignment to class Y is hold in order to properly carry out decisions related to future epochs). Otherwise, the epoch is assigned to the class Y.

In a preferred embodiment, the features for classifying a type of traffic 5 within an epoch are e. g. the packet size of the current packet , the packet size of the previous packets, which might be termed as histogram of packet size (to help detect the exchange of short requests rather than bulk transfers) and statistics like mean value, standard-deviation, minimum, maximum, bytes per packet related to the number of consecutive packets and the corresponding amount of bytes, ingress/egress packet symmetry in terms of bytes, ingress/egress packet symmetry in terms of number of packets and direction in terms of port numbers.

In a preferred embodiment, the type of traffic 5 is a given application/service of the one or more data flows 4, e.g. web application, peer-to-peer, e-mail, chat, FTP, progressive video, or a given UMTS/LTE traffic class such as "conversational", "streaming", "interactive", "background".

In a preferred embodiment, the classification method further comprises to store a plurality of traffic patterns related to different types of traffic 5. The traffic patterns are used during the classification process for comparison the features extracted out of a data flow 4 against the traffic patterns related to different types of traffic as already explained for a specific embodiment above.

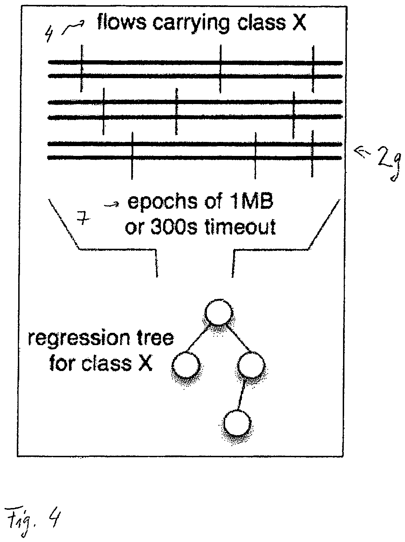

In a preferred embodiment, the traffic patterns are determined related to the different types of traffic 5 during a training phase by collecting features of the one or more data flows 4 in a controlled way with a-priori knowledge of the type of traffic 5 being carried by the one or more data flows 4, wherein the features are collected on the basis of an epoch 7. The determining of the traffic patterns are explained for a preferred embodiment with reference to fig. 4. During a phase before the actual classification of an unknown data flow 4 as presented above, the classification and regression trees used during the "live" traffic classification, have to be built. This phase might be labelled as "training phase" in distinction to the actual classification as presented above which might be labelled as "run-time" classification phase.

During the training phase the statistical characteristics of received packets are collected in a controlled way, i.e. with a-priori knowledge of the type of traffic /class/service/application 5 being carried by a given data flow 4 or a given data traffic 3 comprising the data flow(s) 4 for a given epoch in order to provide the traffic patterns associated to the several traffic types 5.

As depicted in fig. 4., data flows 4 carrying e.g. class X in know percentages, i.e. composed of traffic from traffic class X by e.g. 1 to 100 percent, are selected. The data flows 4 are split into epochs 7 and the regression trees are built, i.e. a regression tree is build for the traffic class X with given percentages. In this phase, at each node of the regression tree, a relation of a specific feature with a threshold value is associated, e.g. for example the decision, if the number of packets 6 is equal or more than a specific threshold value (e.g. 10000 for a 100 percent). The values associated to each decision step give the traffic patterns of a specific traffic class 5, i.e. if the traffic class X with given percentages is used for build a regression tree, it is computed that in this example the number of packets 6 is equal or more than a specific threshold value which corresponds to this type of traffic 5, e.g. in the example of video streaming the threshold value for a number of packets 6 within a given epoch 7 must be equal or exceeding the threshold value of 10000, so that at this decision node the data flow 4 would be classified as carrying at 100 percent the type of traffic/application 5 video streaming.

Equivalently, all features which are supposed to be characteristic for the traffic class 5 are computed out of the data flow 4 carrying the traffic class X so as the threshold values of the features are collected and form the traffic patterns according to this specific class X. Accordingly, for each type of traffic 5, which might be the protocol classes of the data traffic 3 to be classified, a regression tree is built. The implementation of the regression trees as already mentioned in the context of the run-time classification phase is variable due to a manifold classification and regression tree algorithms appropriate for the classification method.

In a preferred embodiment, the packet header fields which have to be scanned to identify the traffic classes 5, e.g. MAC source and destination addresses, VLAN_IDs, 802.1 p bits) are known a-priori.

In a preferred embodiment, the choice of the fields, in a particular embodiment it is the packet header fields, to be scanned to identify the type of traffic 5 are automatically chosen, in particular by the network element 8 in an autonomous decision process.

In a preferred embodiment, the features characterizing the type of traffic 5 are extracted continuously out of the data traffic 3, i.e. out of the data flow 4 respectively. In a preferred embodiment, the features characterizing the type of traffic 5 are extracted periodically out of the data traffic 3, i.e. out of the data flow 4 respectively.

In a preferred embodiment, the transport network 1 is an Ethernet-based transport network. In another preferred embodiment, the transport network 1 is a MPLS (=Multi Protocol Label Switching) network.

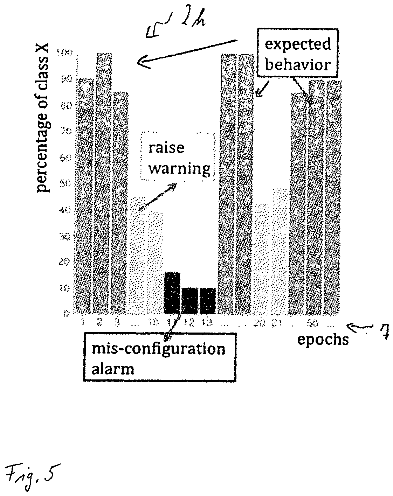

In a preferred embodiment, the method of classifying the traffic type further comprise to use 2h the result of classification, in particular a classified type of traffic 5, for a given epoch 7 for alarm reporting, QoS enforcement, QoS provisioning or QoS monitoring. For exemplary reasons, fig. 5 depicts the situation of an alarm raised if any change or anomaly in the traffic being carried is detected, wherein it is assumed that a data flow 4 is behaving properly during time, it is that under normal conditions epochs 7 close in time carry the same class of traffic 5 in relation to the same data flow 4. This means that the data flow 4 having been classified a specific traffic class X, has the expected behaviour to carry the same traffic class X in the epochs 7 close in time, so that a drop of the percentage of the traffic class 5, i.e. in this case the traffic class X portion over the time of following epochs 7 will result to raise warning, if the percentage drops to a certain amount, or even will result in a mis-configuration alarm, if the percentage drops to another even lower amount.

In a preferred embodiment, the method further comprises to further process the data traffic 3, if the type of traffic 5 being detected is not conformant with the expected behaviour of the data flow 4, wherein the network element 8 decides autonomously over the further processing like redirecting, dropping of the packets 6 of the data flow 4 etc.

## Claims

1. A method for providing QoS management in a packet-based transport network (1),
the method comprising the steps of:
- extracting (2a) out of a data traffic (3) comprising one or more data flows (4) transported via the transport network (1) one or more features characterizing a type of traffic (5);
- comparing (2b) the extracted features against predetermined traffic patterns related to different types of traffic (5); and
- calculating (2c) a classification result based on the comparison.

2. The method according to claim 1, wherein the step of extracting (2a) comprises the step of excerpting (2d) from the data traffic (3) one or more of the data flows (4) on the basis of an epoch (7), wherein an epoch (7) is a certain period of time or a certain amount of received or transmitted data or a combination thereof, and extracting out of the excerpted data flow (4) features characterizing the type of traffic (5) of said data flow (4).

3. The method according to claim 1, wherein the classification result is calculated (2c) on the basis of an epoch (7).

4. The method according to claim 3, wherein the step of calculating (2c) a classification result comprises:
- evaluating (2e) based on the comparison an estimate of the portion of traffic of a traffic type (5) in the epoch (7); and
- assigning (2f) the epoch (7) to a traffic type (5) based on the estimate.

5. The method according to claim 3, wherein the step of calculating (2c) a classification result further comprises
- considering the classification results determined about previous epochs and stored in a history buffer before classifying a current epoch (7), wherein, if a current epoch (7) is carrying a type of traffic (5) different from an expected one, the current value of epochs previously assigned to the expected type of traffic (5) is computed based on the history buffer and the current epoch (7) is assigned to the expected type of traffic (5), if the current value of epochs previously assigned to the expected type of traffic (5) is equal or higher than a predetermined percentage value, and the current epoch (7) is assigned to the estimated type of traffic (5) different from the expected one, if the current value of epochs previously assigned to the expected type of traffic (5) is lower than the predetermined percentage value.

6. The method according to claim 1, wherein the features characterizing a type of traffic (5) are selected from the group: packet size of the current packet (6), packet size of the previous packets (6) and statistics, in particular mean value, standard-deviation, minimum, maximum, bytes per packet related to the number of consecutive packets and the corresponding amount of bytes, ingress/egress packet symmetry in terms of bytes, ingress/egress packet symmetry in terms of number of packets and direction in terms of port numbers.

7. The method according to claim 1, wherein the type of traffic (5) is a given application/service of the one or more data flows (4), in particular web application, peer-to-peer, e-mail, chat, FTP, progressive or interlaced video, or a given UMTS/LTE traffic class such as "conversational", "streaming", "interactive", "background".

8. The method according to claim 1, further comprising:
- storing a plurality of traffic patterns related to different types of traffic (5).

9. The method according to claim 1, wherein the method further comprises:
- determining (2g) the traffic patterns related to the different types of traffic (5) during a training phase by collecting features of the one or more data flows (4) in a controlled way with a-priori knowledge of the type of traffic (5) being carried by the one or more data flows (4), wherein the features are collected on the basis of an epoch (7).

10. The method according to claim 9, wherein the step of determining (2g) the traffic patterns comprises:
- scanning packet header fields of the packets (6) of the one or more data flows (4) to identify the type of traffic (5), wherein the packet header fields to be scanned to identify the type of traffic (5) are known a-priori or are chosen automatically.

11. The method according to claim 1, wherein the method comprises continuously or periodically executing the step of extracting features characterizing the type of traffic (5).

12. The method according to claim 1, wherein the transport network (1) is an Ethernet-based transport network or a MPLS network.

13. The method according to claim 1, wherein the method further comprises:
- using (2h) the result of classification for a given epoch (7) for alarm reporting, QoS enforcement, QoS provisioning, QoS monitoring.

14. The method according to claim 1, wherein the method further comprises:
- further processing the data traffic (3), if the type of traffic (5) being detected is not conformant with the expected behaviour of the data flow (4), wherein the network element (8) decides autonomously over the further processing of the traffic, in particular redirecting, dropping etc.

15. A controller adapted to
- extract (2a) out of a data traffic (3) comprising one or more data flows (4) transported via a transport network (1) features characterizing a type of traffic (5);
- compare (2b) the extracted features against predetermined traffic patterns related to different types of traffic (5); and
- calculate (2c) a classification result based on the comparison.

16. A network element (8) adapted to
extract (2a) out of a data traffic (3) comprising one or more data flows (4) transported via a transport network (1) features characterizing a type of traffic (5).

17. A data processing unit adapted to
compare (2b) one or more extracted features characterizing a type of traffic (5) against predetermined traffic patterns related to different types of traffic (5) and calculate (2c) a classification result based on the comparison.

## Amended claims

### Amended claims in accordance with Rule 137(2) EPC.

**1.** A method for providing QoS management in an Ethernet-based transport network (1),
the method comprising the steps of:
- extracting (2a) out of a data traffic (3) comprising one or more data flows (4) transported via the transport network (1) one or more features characterizing a type of traffic (5) being a traffic class defined by Ethernet Classes of Service, CoS,
wherein the step of extracting (2a) comprises the step of excerpting (2d) from the data traffic (3) one or more of the data flows (4) on the basis of information in frame header fields having common layer2 Ethernet frame header parameters indicating a corresponding Ethernet CoS on the basis of an epoch (7), wherein an epoch (7) is a certain period of time or a certain amount of received or transmitted data or a combination thereof, and extracting out of each excerpted data flow (4) features characterizing the type of traffic (5);
- comparing (2b) the extracted features against predetermined traffic patterns related to different types of traffic (5);
- calculating (2c) a classification result based on the comparison; and
- further processing the data traffic (3) based on the classification result by properly re-marking the frame header fields, reporting an alarm, forwarding, redirecting and/or dropping the traffic.

**2.** The method according to claim 1, wherein the classification result is calculated (2c) on the basis of an epoch (7).

**3.** The method according to claim 2, wherein the step of calculating (2c) a classification result comprises:
- evaluating (2e) based on the comparison an estimate of the portion of traffic of a traffic type (5) in the epoch (7); and
- assigning (2f) the epoch (7) to a traffic type (5) based on the estimate.

**4.** The method according to claim 2, wherein the step of calculating (2c) a classification result further comprises
- considering the classification results determined about previous epochs and stored in a history buffer before classifying a current epoch (7), wherein, if a current epoch (7) is carrying a type of traffic (5) different from an expected one, the current value of epochs previously assigned to the expected type of traffic (5) is computed based on the history buffer and the current epoch (7) is assigned to the expected type of traffic (5), if the current value of epochs previously assigned to the expected type of traffic (5) is equal or higher than a predetermined percentage value, and the current epoch (7) is assigned to the estimated type of traffic (5) different from the expected one, if the current value of epochs previously assigned to the expected type of traffic (5) is lower than the predetermined percentage value.

**5.** The method according to claim 1, wherein the features characterizing a type of traffic (5) are selected from the group: packet size of the current packet (6), packet size of the previous packets (6) and statistics, mean value, standard-deviation, minimum, maximum, bytes per packet related to the number of consecutive packets and the corresponding amount of bytes, ingress/egress packet symmetry in terms of bytes, ingress/egress packet symmetry in terms of number of packets and direction in terms of port numbers.

**6.** The method according to claim 1, wherein the type of traffic (5) is a given application/service of the one or more data flows (4), web application, peer-to-peer, e-mail, chat, FTP, progressive or interlaced video, or a given UMTS/LTE traffic class such as "conversational", "streaming", "interactive", "background".

**7.** The method according to claim 1, further comprising:
- storing a plurality of traffic patterns related to different types of traffic (5).

**8.** The method according to claim 1, wherein the method further comprises:
- determining (2g) the traffic patterns related to the different types of traffic (5) during a training phase by collecting features of the one or more data flows (4) in a controlled way with a-priori knowledge of the type of traffic (5) being carried by the one or more data flows (4), wherein the features are collected on the basis of an epoch (7).

**9.** The method according to claim 8, wherein the step of determining (2g) the traffic patterns comprises:
- scanning packet header fields of the packets (6) of the one or more data flows (4) to identify the type of traffic (5), wherein the packet header fields to be scanned to identify the type of traffic (5) are known a-priori or are chosen automatically.

**10.** The method according to claim 1, wherein the method comprises continuously or periodically executing the step of extracting features characterizing the type of traffic (5).

**11.** The method according to claim 1, wherein the transport network (1) is an Ethernet-based transport network or a MPLS network.

**12.** The method according to claim 1, wherein the method further comprises:
- using (2h) the result of classification for a given epoch (7) for alarm reporting, QoS enforcement, QoS provisioning, QoS monitoring.

**13.** The method according to claim 1, wherein the method further comprises:
- further processing the data traffic (3), if the type of traffic (5) being detected is not conformant with the expected behaviour of the data flow (4), wherein the network element (8) decides autonomously over the further processing of the traffic, redirecting, dropping.

**14.** A controller adapted to
- extract (2a) out of a data traffic (3) comprising one or more data flows (4) transported via a transport network (1) features characterizing a type of traffic (5) being a traffic class defined by Ethernet Classes of Service, CoS,
wherein the step of extracting (2a) comprises the step of excerpting (2d) from the data traffic (3) one or more of the data flows (4) on the basis of information in frame header fields having common layer2 Ethernet frame header parameters indicating a corresponding Ethernet CoS on the basis of an epoch (7), wherein an epoch (7) is a certain period of time or a certain amount of received or transmitted data or a combination thereof, and extracting out of each excerpted data flow (4) features characterizing the type of traffic (5);
- compare (2b) the extracted features against predetermined traffic patterns related to different types of traffic (5); and
- calculate (2c) a classification result based on the comparison.

**15.** A network element (8) adapted to
- extract (2a) out of a data traffic (3) comprising one or more data flows (4) transported via a transport network (1) features characterizing a type of traffic (5) being a traffic class defined by Ethernet Classes of Service, CoS, wherein the step of extracting (2a) comprises the step of excerpting (2d) from the data traffic (3) one or more of the data flows (4) on the basis of information in frame header fields having common layer2 Ethernet frame header parameters indicating a corresponding Ethernet CoS on the basis of an epoch (7), wherein an epoch (7) is a certain period of time or a certain amount of received or transmitted data or a combination thereof, and extracting out of each excerpted data flow (4) features characterizing the type of traffic (5),
- compare (2b) the extracted features against predetermined traffic patterns related to different types of traffic (5);
- calculate (2c) a classification result based on the comparison; and
- to further process the data traffic (3) based on the classification result by properly re-marking the frame header fields, reporting an alarm, forwarding, redirecting and/or dropping the traffic.

**16.** A data processing unit adapted to
compare (2b) one or more extracted features characterizing a type of traffic (5) being a traffic class defined by Ethernet Classes of Service, CoS against predetermined traffic patterns related to different types of traffic (5) and calculate (2c) a classification result based on the comparison.
